# EUROPEAN PATENT SPECIFICATION

(11) **EP 1 791 378 B1**
(45) Date of publication and mention of the grant of the patent: **10.02.2010**
(21) Application number: 05257339.1
(22) Date of filing: 29.11.2005
(51) Int. Cl.: H04W 12/10

(54) **Checking wireless access software by hashing identifiers**
Überprüfung von drahtloser Zugangssoftware mittels Hashing von Kennungen
Vérification du logiciel d'accès sans fil par hachage des identifiants

(43) Date of publication of application: 30.05.2007
(73) Proprietor: Research In Motion Limited, Waterloo, Ontario N2L 3W8 (CA)
(72) Inventor: Bumiller, George Baldwin, Ramsey, New Jersey, 07446 (US); Buckley, Adrian, Tracy, CA, 95376 (US)
(74) Representative: Hibbert, Juliet Jane Grace

(56) References cited:
- WO-A-2004/092886
- US-B1- 6 243 468

## Description

### BACKGROUND

### 1. Technical Field

Exemplary embodiments of this invention relate a mobile software terminal identifier. More particularly, exemplary embodiments of this invention relate to a mobile software terminal identifier which is generated as a hash value and used to ensure that software for interfacing with a wireless network has not been modified in an unauthorized manner, and to track terminal hardware and terminal software for obtaining wireless access.

### 2. Description of Related Art

The use of a hash algorithm on a PC has been performed by Microsoft®. US Patent No. 6,243,468 (assigned to Microsoft®) discloses an example of using a hash algorithm on a PC. The hash algorithm is used to ensure that the Microsoft® operating system software only operates on the PC on which it was originally installed, and that it does not operate on additional PCs that it is not licensed to operate on. Alternatively, the hash algorithm is used to ensure that the Microsoft® operating system only operates on the PC to which it has been moved and that the operating system has been re-validated by Microsoft®. The hash algorithm checks some or all of the hardware component of the PC on which the Microsoft® operating system (OS) software is to be installed, calculates a hash based on the hardware elements of the PC on which the OS is to be used, communicates with Microsoft®, and obtains a code to enable the OS to operate When the PC is started up again, the hash is calculated: if it is the same or within certain limits (that Microsoft® operate, and the user will have to communicate with Microsoft® if the PC hardware has been significantly changed. The hash checks only the hardware that the OS is installed on or to be installed on.

Published application WO 2004/092886 A2 to Michaelis et al has disclosed techniques for associating software with hardware in a wireless device. A wireless device validates software code within a code image, the code image having been sent from a code generating entity to the wireless device.

Many known mobile terminals arc "closed" devices which permit essentially no user access to the software programming of the device (except recently for certain applications that the user is permitted to additionally install). These terminals are thus "fixed" except for the terminal manufacturer's initiated bug fixes and upgrades and permitted applications. Each of these terminals that uses a licensed "cellular" radio band; the terminal is identified by an international mobile equipment identifier (IMEI) if it is based on the Third-Generation Partnership Protocol (3GPP) standards (or an ESN (electronic serial number) if it is based on 3GPP2 standards). This IMEI is a unique number that can be accessed by a network operator. This IMEI is linked to the manufacturer of the terminal and the testing that ensured that the terminal conformed to the 3GPP requirements. The IMEI, since it is embedded in the terminal at manufacture in a manner to prevent any change, provides assurance to the operator that the terminal conforms to the applicable wireless standards and will operate without adversely affecting the network.

A new configuration of "terminal" has now been developed with the addition of a wireless local area network (WLAN) to the 3GPP access technologies. This "terminal" or "user equipment" may include a personal computer (PC) or personal digital equipment (PDA) or other device with a processor equipped with WLAN capability hardware and software (either built-in or added via a network interface card (NIC)) for WLAN access to a 3GPP network operator, and a subscriber identity module (SIM or universal subscriber identity module (USIM)) with a reader to interface the SIM (or USIM) to the PC and its software. This terminal has no IMEI since it does not use a licensed 3GPP radio band for WLAN communications, although there are now PCs that have cellular terminal capability built-in, and therefore will have a place for a SIM (or other means of storing subscription information, such as a PC Card to hold the SIM, and in such case the PC Card may comprise a cellular terminal).

This "terminal" may be assembled by a user. Since it is PC or PDA-based, there is an opportunity to "hack" the software used to interface with the mobile network. This opportunity to "hack" the software is much greater than in the "closed" terminals used in the licensed 3GPP radio bands. With the WLAN "terminal" configured by the user (or by others) which is based on a PC or PDA, there is no means of tracking the software used for the 3GPP WLAN access or tracking the "terminal" (i.e., computer plus WLAN NIC and software). There is also no means of ensuring that the software has not been "hacked." Even further, there is no means for the network operator to "personalize" the "terminal" to ensure that the terminal (which includes software provided by the 3GPP network operator) operates only with a SIM or USIM or other subscription (e.g., CDMA terminals manufactured without provision for a Removable User Identity Module or RUIM) provided by the network operator. "Personalizing" the terminal is also known as "SIM-locking"; it prevents the terminal from operating using a SIM from a different network operator.

### SUMMARY

Such problems are solved by generating and using an international mobile software terminal identifier (IMSTI) unique to the terminal (the hardware and software configuration), which identifies the terminal and the communications software provided by the network operator. This IMSTI, together with software on the SIM or USIM, ensures that the software for providing an interface for wireless access has not been changed. The software used in the terminal for obtaining wireless access to a network can thus be secured and checked to prevent its replacement by rogue software which would compromise the user and the network.

The IMSTI may be used when the SIM or USIM is in a radio module which has an IMEI. Should all the WLAN 3GPP access software be stored on the NIC (that has an IMEI), then the IMEI would provide an identity function and security of the software.

In one exemplary embodiment, a method for use in an electronic device, including at least one software component and at least one hardware component, comprises generating a hash value by performing a hashing algorithm on an identifier of the at least one software component and an identifier of the at least one hardware component, and determining whether software used by the electronic device for accessing a wireless network remains unmodified based on the generated hash value. This exemplary embodiment may be embodied in hardware, software or a combination of hardware and software.

The hash value may be stored on a subscriber identity module (SIM) or a universal subscriber identity module (USIM) operatively coupled with the electronic device. The generated hash value may be encrypted prior to being stored in the subscriber identity module (SIM) or the universal subscriber identity module (USIM). The generated hash value may also be encrypted before transmitting this encrypted hash value from the electronic device to the wireless network. The hashing algorithm may also be stored in a subscriber identity module (SIM) or a universal subscriber identity module (USIM) operatively coupled with the electronic device. Alternatively, the hashing algorithm may be stored in the terminal (e.g., in a CDMA terminal without RUIM) that is capable of securely storing the algorithm and the hash. The hashing algorithm may, with lesser security, be stored in a terminal that does not provide such secure storage, however, users or network operators would not typically chose this course of action.

Determining whether the software (and hardware configuration) used by the electronic device for access to a wireless network remains unmodified based on the generated hash value may comprise storing the generated hash value, generating another hash value by performing the hashing algorithm on an identifier of the at least one software component and an identifier of the at least one hardware component, and comparing the another hash value with the stored hash value. The another hash value may also be transmitted to the network operator for comparison with the hash value initially calculated when the terminal hardware and software was originally configured and registered with the home network operator. Determining whether the software used by the electronic device for access to a wireless network remains unmodified based on the generated hash value may alternatively comprise comparing the generated hash value with a previously determined hash value received from the wireless network.

To provide further security, the another hash value may be replaced by a temporary hash value, in a manner similar to the use of a TIMSI (temporary IMSI) for transmission to the network operator when transmission of the IMSI would otherwise be required.

Determining whether the software used by the electronic device for access to the wireless network remains unmodified may be initiated by a start-up process of the electronic device or in response to a challenge signal received by the electronic device from the wireless network. The electronic device may externally transmit a signal indicating the determining of whether the software used by the electronic device for access to the wireless network remains unmodified. For example, after receiving a challenge signal, the electronic device may externally transmit a response signal indicating the determination of whether the software used by the electronic device for access to the wireless network remains unmodified. The transmitted signal may be encrypted.

### BRIEF DESCRIPTION OF THE DRAWINGS

These and other advantages of the exemplary embodiments will be more completely understood and appreciated by careful study of the following more detailed description in conjunction with the accompanying drawings, in which:
FIG. **1A** is an overall system wide schematic view of an exemplary wireless communication system incorporating a mobile wireless communication device performing a hash algorithm on component identifiers of the device to generate an international mobile software terminal identifier (IMSTI) and performing an associated IMSTI checking routine in accordance with one exemplary embodiment of this invention;

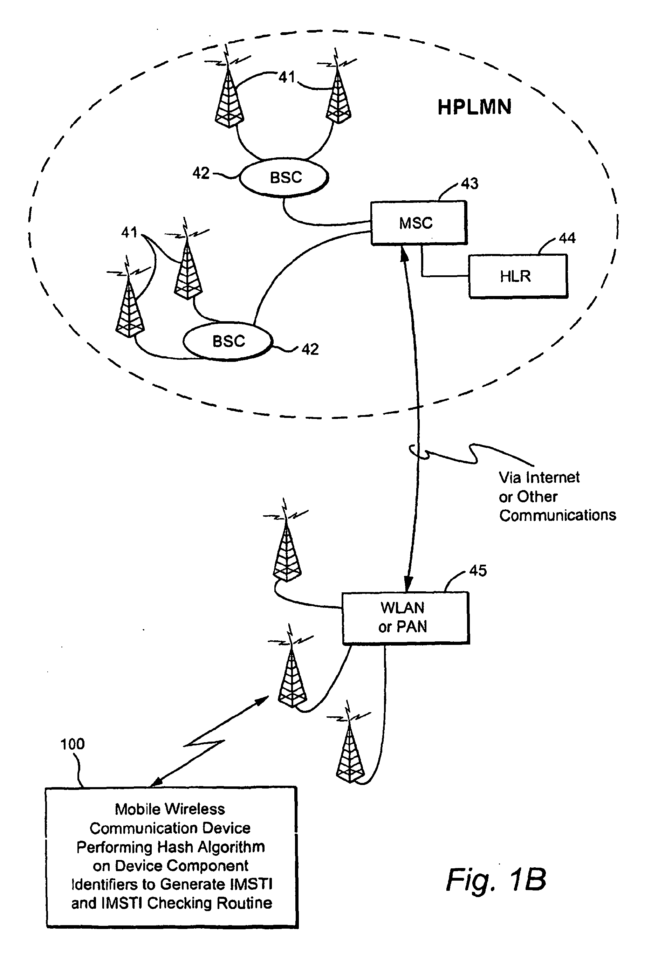

FIG. **1B** is another overall system wide schematic view of an exemplary wireless communication system providing any of the subscription services such as voice, text, email, SMS, circuit switched or packet switched data communications, multimedia service, etc. that the network operator may provide and incorporating a mobile wireless communication device performing a hash algorithm on component identifiers of the device to generate an international mobile software terminal identifier (IMSTI) and performing an associated IMSTI checking routine in accordance with another exemplary embodiment of this invention;
FIG. **2A** is an abbreviated schematic diagram of hardware included within an exemplary mobile wireless communication device of FIG. **1A** or **1B**;
FIG. **2B** is an abbreviated schematic diagram of hardware of an alternative exemplary mobile wireless communication device which may be utilized in the system of FIG. **1A** or **1B****;**
FIG. **3** is an exemplary abbreviated schematic flow chart of computer software (i.e., program logic) that may be utilized in the device of FIG. **2A** or **2B** for providing a hashing algorithm and IMSTI checking routine;
FIG. **4** is an exemplary abbreviated schematic flow chart of computer software (i.e., program logic) that may be utilized in the device of FIG. **2A** or **2B** to perform a hashing algorithm and IMSTI checking routine at a start-up operation of the device;
FIG. **5** is an exemplary abbreviated schematic flow chart of computer software (i.e., program logic) that may be utilized in the device of FIG. **2A** or **2B** to perform a hashing algorithm and IMSTI checking routine upon receipt of a challenge signal from a wireless network; and
FIG. **6** is an exemplary abbreviated schematic flow chart of computer software (i.e., program logic) that may be utilized in the device of FIG. **2A** or **2B** to perform a hashing algorithm and IMSTI checking routine for a device having a different SIM or USIM card upon transmission of a request from the mobile wireless communication device to a wireless network.

### DETAILED DESCRIPTION OF EXEMPLARY EMBODIMENTS

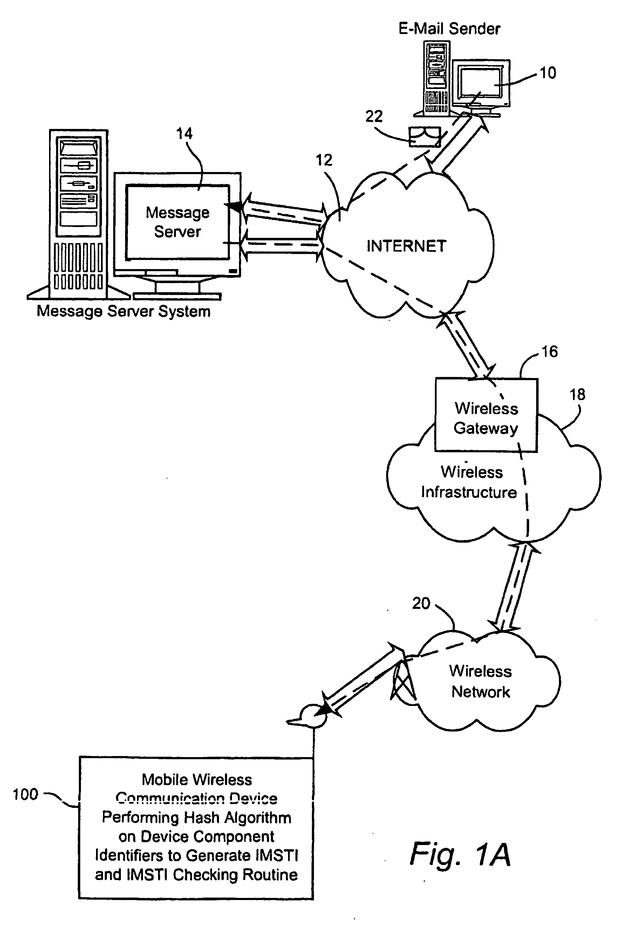

FIG. **1A** is an overview of an exemplary communication system in which a wireless communication device **100** may be used in accordance with this invention. One skilled in the art will appreciate that there may be hundreds of different system topologies. There may also be many message senders and recipients. The simple exemplary system shown in FIG. **1A** is for illustrative purposes only, and shows perhaps the currently most prevalent Internet e-mail environment. The communication system may provide any of the services (voice, text, SMS, email, circuit switched or packet switched data communications, multimedia service, etc.) that the network operator allows for subscription without limit.

FIG. **1A** shows an e-mail sender **10,** the Internet **12,** a message server system **14,** a wireless gateway **16,** wireless infrastructure **18,** a wireless network **20** and a mobile communication device **100.**

An e-mail sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as American Online^{™} (AOL). Those skilled in the art will appreciate that the systems shown in FIG. **1A** may instead be connected to a wide area network (WAN) other than the Internet, although e-mail transfers are commonly accomplished through Internet-connected arrangements as shown in FIG. **1A****.**

The message server **14** may be implemented, for example, on a network computer within the firewall of a corporation, a computer within an ISP or ASP system or the like, and acts as the main interface for e-mail exchange over the Internet **12.** Although other messaging systems might not require a message server system **14,** a mobile device **100** configured for receiving and possibly sending e-mail will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in FIG. **1A****,** as they do not directly play a role in the invention described below. Message servers such as server **14** typically extend beyond just e-mail sending and receiving; they also include dynamic database storage engines that have predefined database formats for data like calendars, to-do lists, task lists, e-mail and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** such as a wireless local area network (WLAN) to the mobile device **100.** The particular network **20** may be virtually any wireless network over which messages may be exchanged with a mobile communication device.

As shown in FIG. **1A****,** a composed e-mail message **22** is sent by the e-mail sender **10**, located somewhere on the Internet **12.** This message **22** typically uses traditional Simple Mail Transfer Protocol (SMTP), RFC 822 headers and multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded bv the message server to the mobile device **100.** Some systems provide for automatic routing of such messages which are addressed using a specific e-mail address associated with the mobile device **100.** In an exemplary embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (**2**) voice-centric wireless networks and (3) dual-mode networks that can support both voice and data communications over the same physical base stations. Combined dual-mode networks include, but are not limited to, (1) Code Division Multiple Access (CDMA) networks, (**2**) the Group Special Mobile or the Global System for Mobile Communications (GSM) and its family (GPRS, EDGE, and future) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, TDMA systems, and analog voice systems.

As noted above, the exemplary system shown in FIG. **1A** is for illustrative purposes only. For example, FIG. **1B** shows an overview of alternative communication system in which device **100** may be used. This alternative system includes a home public land mobile network (HPLMN) which includes base stations **41** connected to respective base station controllers (BSCs) **42** which are in turn connected to a mobile switching center (MSC) **43.** The MSC **43** communicates with a home location register **44** which serves as a database for storing subscriber information. The MSC **43** communicates via the internet or other communications vehicle with a wireless local area network (WLAN) **45** or a personal area network (PAN). The WLAN **45** (or PAN) communicates with device **100** through one of its associated base stations. The communications may involve email, voice, text, SMS, circuit switched or packet switched data communications and/or multimedia services. While a public land mobile network is illustrated in FIG. **1B****,** other networks such as satellite networks (e.g., iridium) are also available.

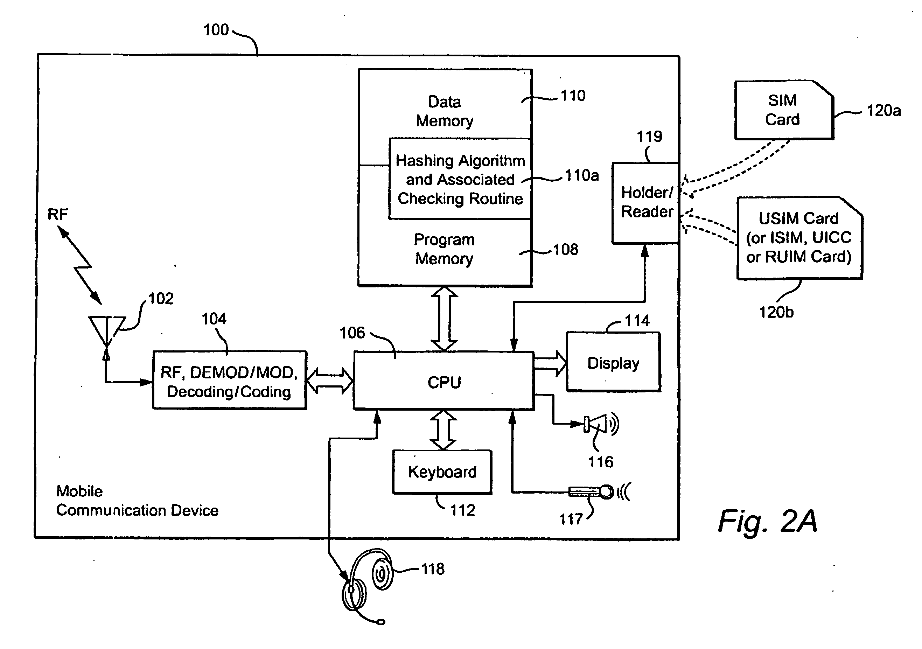

As depicted in FIG. **2A****,** mobile communication device **100** includes a suitable RF antenna **102** for wireless communication to/from wireless network **20** such as a wireless local area network (WLAN). Conventional RF, demodulation/modulation and decoding/coding circuits **104** are provided to form a communications module. As those in the art will appreciate, such circuits can involve possibly many digital signal processors (DSPs), microprocessors, filters, analog and digital circuits and the like. However, since such circuitry is well known in the art, it is not further described

The mobile communication device **100** will also typically include a main control CPU **106** which operates under control of a stored program in program memory **108** (and which has access to data memory **110).** CPU **106** also communicates with a conventional keyboard **112,** display **114** (e.g., an LCD), audio transducer or speaker **116,** microphone **117,** headset **118** (wired or wireless) and card holder/reader **119.** A portion of program and/or data memory **110a** is available for storing a hashing algorithm and associated checking routine which may be loaded from a removable "smart" card such as a removable subscriber identity module (SIM) card **120a** or removable universal subscriber identity module (USIM) card **120b.** Suitable computer program executable code is thus stored in portions of memory **110a** and/or card **120a, 120b** to constitute hashing and associated checking logic as described below. The hashing algorithm, checking routine and hash may be stored directly in a memory of device **100.** Subscription information may also be stored in card 120a, 120b, or directly in a memory (e.g., memory 110, 110a and/or 108) rather than being downloaded from the card 120a or 120b.

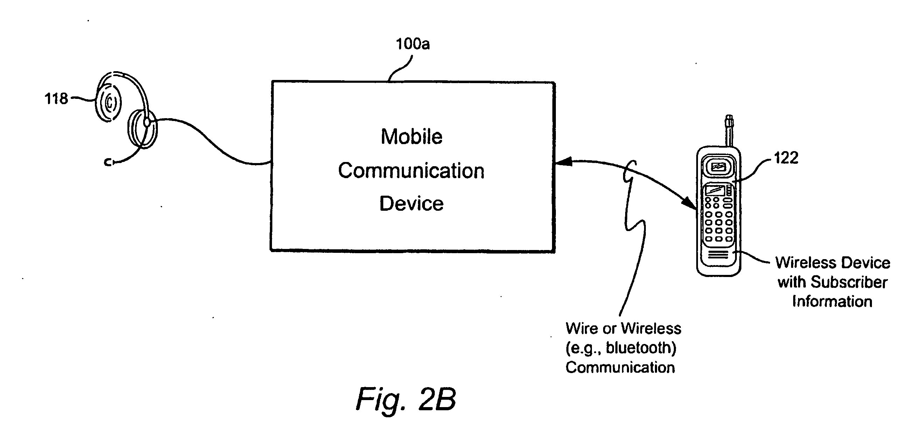

While the foregoing description relates to the card **120a** or **120b** being installed in communication device **100,** the card may instead be installed into another wireless device such as a cellular telephone **122** as illustrated in Fig. 2B. Subscriber information (e.g., subscriber identity) is thus loaded into cellular telephone **122** via the installed card. Other information such as hash algorithm may also be downloaded. The cellular telephone **122** then communicates this and other information to mobile communication device **100a** via a wired or wireless link (e.g., via Bluetooth link). Mobile communication device **100a** is identical to mobile communication device **100** illustrated in FIG. **2A****,** but does not include the functionality of card reader/holder **119** since the card is inserted in cellular telephone device **122** instead.

In this particular example, the hashing algorithm and associated checking routine is loaded into the mobile communication device **100** as part of a 3GPP WLAN terminal software installation process. This installation process includes connecting a WLAN network information card (NIC) into the mobile wireless communication device **100** if the device **100** does not already include a built-in one. The 3GPP WLAN service-enabled SIM card **120a** or USIM card **120b** (hereinafter referred to as a SIM card **120a,** although those skilled in the art will appreciate that a USIM card **120b** can be used) is inserted in the card holder/reader **119.** Even further alternatives exist for the "smart" cards **120a** or **120b** such as Internet Protocol Multimedia Service (IMS) subscriber identity module (ISIM) card, or a multi-application card, i.e., the universal integrated circuit card (UICC). The UICC may contain a plurality of applications such as SIM, USIM, ISIM and other applications. Even further types of cards may be used such as a removable user identity module card in CDMA devices, although CDMA devices may make continuing use of subscriber information stored directly in a memory of the device itself.

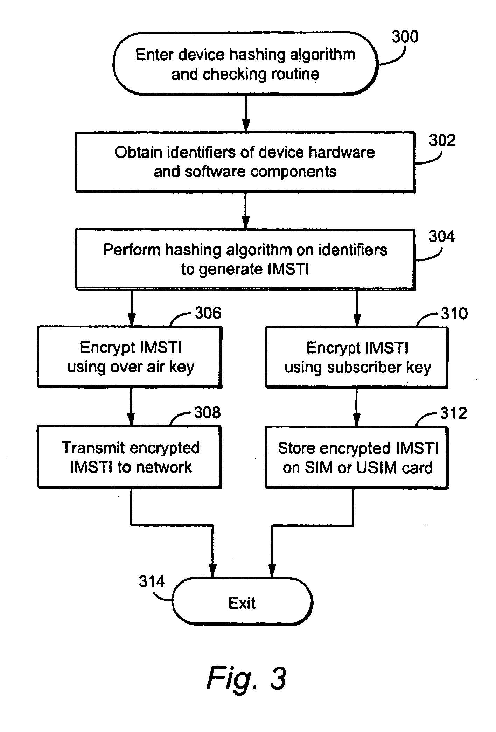

FIG. 3 illustrates an exemplary abbreviated schematic flow chart of program logic that may be utilized in the device of FIG. 2A or 2B to perform a hashing algorithm and IMSTI checking routine at a start-up operation of the device. After the communication device **100** has been turned on, the 3GPP WLAN terminal software is loaded from the subscriber's (i.e., user's) 3GPP network operator or other approved source and installed As part of the installation, the SIM and device software send a message to the wireless network **20** (e.g., a public land mobile network (PLMN)) that the communication device **100** is being configured and enabled. The program logic module for performing a hashing algorithm and associated checking routine is then entered at step **300.**

During performance of the program logic module, the hashing algorithm obtains identifiers of hardware and software components of the communication device **100** at step **302.** For example, the hashing algorithm when checking hardware identities obtains an identifier of CPU **106,** a serial and type identifier for a hard storage drive forming program memory **108** and/or data memory **110,** a communication device type and serial PIN, and/or a WLAN module MAC address identifier. Additionally, the hashing algorithm checks the software on the communication device 100 to obtain a WLAN 3GPP (or 3GPP2 or other) access software identifier. The hashing algorithm may also check identifiers of other software components installed on the communication device 100 such as the operating system software (e.g. Symbian, MS Windows, Linux, Java, or other). These software identifier(s), particularly the WLAN access software identifier, are used by the hashing algorithm to ensure that any "hacked" software will result in a different "hash" result, thereby ensuring the operator that the desired WLAN access software is in use and is unchanged. While this applies to WLAN access software generally, the hashing algorithm could also use other software identifier(s) in cases where a different wireless access software is used (e.g. software for use in unlicensed wireless bands such as Bluetooth, etc.). In addition, other or different identifiers for hardware and software components of the communication device **100** may also he obtained- for example, if the SIM (or subscriber identity module) is in a PC Card or other device that has an IMEI, the IMEI may be one of the identifiers checked. The identifiers may be encrypted for security purposes. The hashing algorithm, which may be securely stored on the installed SIM card **120a** or stored directly in a memory of the device **100,** generates a unique IMSTI using the obtained identifiers at step **304.** The IMSTI forms a hash value which is then encrypted using an over air key at step **306** and encrypted using a subscriber key at step **310.** The communication device **100** then transmits the IMSTI encrypted at step **306** to the wireless network **20** at step **308.** Transmitting the encrypted IMSTI to the wireless network **20** may be accomplished using a class 2 short message service (SMS) or other technique. The wireless network **20** stores the encrypted IMSTI and sends confirmation to the communication device **100** that the SIM configuration indicated by the IMSTI has been accepted or rejected. The IMSTI encrypted at step **310** is stored on the SIM card and/or on a memory of the device **100** such as the memory storing the hashing algorithm at step **312.** The program logic module illustrated in FIG. **3** exits at step **314.**

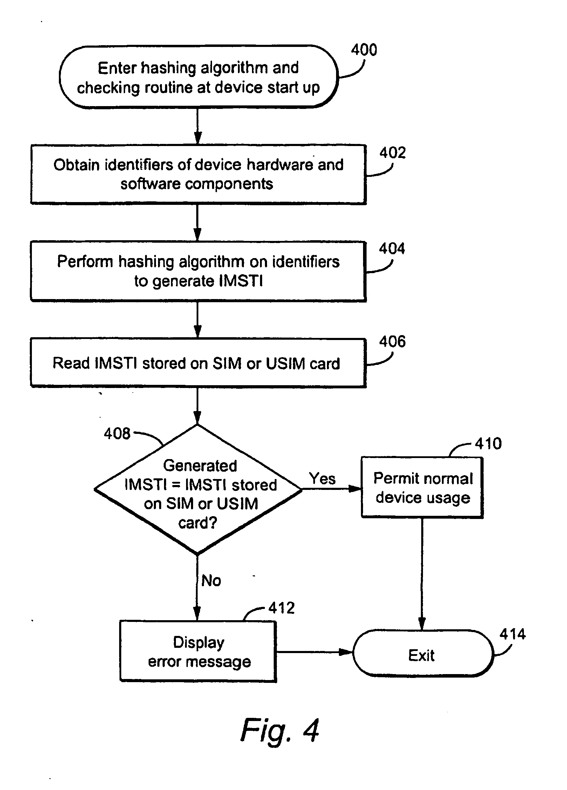

A program logic module flow chart illustrated in FIG. **4** for performing a hashing algorithm and IMSTI checking routine which is initiated at a start-up process of the communication device **100** (e.g., at a start-up process of the SIM) is entered at step **400.** The program logic module obtains identifiers of hardware and software components of the communication device **100** at step **402.** These hardware and software components may or may not (i.e., the components may be modified) be the same as those whose identifiers are obtained in step **302.** These identifiers are encrypted for security purposes since the communication device **100** may be an open platform. The encrypted identifiers are then forwarded to the hashing algorithm stored on the installed SIM card **120a** (or other memory of device **100**). The hashing algorithm is performed on the obtained identifiers to generate a IMSTI at step **404.**

A previously generated IMSTI stored on the SIM card **120a** (or other memory of the device **100**) is read at step **406.** While FIG. **4** illustrates step **406** being performed after steps **402** and **404,** it will be understood that step **406** may alternatively be performed before or at the same time as steps **402** and **404.** The IMSTI generated at step **404** is compared to the previously generated IMSTI (i.e., the IMSTI read from the SIM card **120a** at step **406**) at step **408.** If the IMSTI generated at step **404** and the previously generated IMSTI read at step **406** match ("Yes" in step **408**), normal device usage is permitted at step **410.** If, however, the IMSTI generated at step **404** and the previously generated IMSTI read at step **406** do not match ("No" in step **408**), an error message is displayed on the display **114** of the communication device **100** at step **412.** This mismatch would occur, for example, if the software and/or hardware components of the communication device **100** have been modified so as to provide different identifiers in step **402** for the hashing algorithm performed in step **404.** Performance of the hashing algorithm at step **404** would result in a different hash value being generated based on the different identifiers. In addition to displaying an error message in step **412,** a corresponding message indicating this error may be transmitted to the wireless network **20** and/or certain operations of the device (e.g., access to the wireless network to perform a call) may be shut down. By performing the hashing algorithm and associated IMSTI checking routine, device hardware and software may thus be tracked, and it may be determined whether the device software used for interfacing with the wireless network **20** has been hacked. The program logic module illustrated in FIG. **4** exits at step **414.**

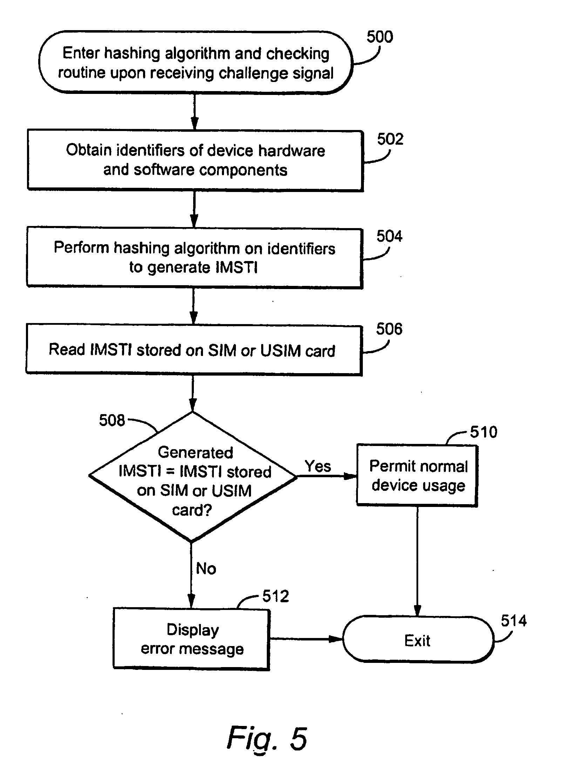

In addition to (or alternatively to) the program logic module illustrated in FIG. 4 involving performing a hashing algorithm and associated IMSTI checking routine at a device start-up process, a program logic module illustrated in FIG. **5** for performing a hashing algorithm and associated IMSTI checking routine which is initiated upon the communication device's receipt of a challenge signal from the wireless network **20** may be entered at step **500.** After receiving the challenge signal, the program logic module illustrated in FIG. **5** obtains identifiers of hardware and software components from the communication device **100** at step **502.** These hardware and software components may or may not (i.e., components may be modified) be the same as those components whose identifiers were obtained in step **302.** These identifiers are encrypted for security purposes since the communication device **100** may be an open platform. The encrypted identifiers are forwarded to the hashing algorithm stored on the installed SIM card **120a** (or other memory of device **100).** The hashing algorithm generates a IMSTI based on the identifiers at step **504.**

A previously generated IMSTI stored on the SIM card **120a** (or other memory of device **100**) is then read at step **506.** While FIG. **5** illustrates step **506** being performed after steps **502** and **504,** it will be understood that step **506** may instead be performed before or at the same time as steps **502** and **504.** The IMSTI generated in step **504** is compared to the previously generated IMSTI (ie, the IMSTI read from the SIM card **120a** at step **506**) at step **508.** If the IMSTI generated at step **504** and the previously generated IMSTI read at step **506** match ("Yes" in step **508),** normal device usage is permitted at step **510.** If, however, the IMSTI generated at step **504** and the previously generated IMSTI read at step **506** do not match ("No" in step **508**), an error message is displayed on the display **114** of the communication device **100** at step **512.** This would occur, for example, if the software and/or hardware components of the communication device **100** have been modified, thereby resulting in different identifiers in step **502** being provided to the hashing algorithm performed in step **504.** In addition to displaying an error message in step **512,** a corresponding message indicating this error may be transmitted to the wireless network **20** and/or certain operations of the communication device **100** such as access to the wireless network to perform a call may be prevented.

Accordingly, a program logic module for performing a hashing algorithm to generate an IMSTI as a hash value and an IMSTI checking routine may be initiated during a device start-up process (FIG. 4) and/or upon the device's receipt of a challenge signal from the wireless network **20** (FIG. 5). The performance of this program logic module, irrespective of how started, will allow a determination to be made regarding whether the device hardware and/or software for forming an interface with the wireless network **20** has been modified since a modified interface will provide a different IMSTI as a result of the performance of the hash algorithm. Security for the communication device and network can thus be preserved. The program logic module illustrated in FIG. 5 exits at step **514.**

The wireless network **20** may transmit a challenge signal to the communication device **100** either randomly or on a predetermined periodic basis. After receiving this challenge signal, the communication device **100** may perform a process less strenuous than a full check required to perform the full hash as described in steps **502-504.** For example, after receiving the challenge signal, the SIM may check only for the identifier of a selected component(s) such as the WLAN MAC address or serial number of CPU **106.** These identifiers are less than the full set of identifiers required to perform a full hash as described in steps **502-504.** These identifiers would be compared to corresponding values stored in the SIM card **120a** to check the configuration of the communication device **100.**

If the retrieved identifier matches the corresponding identifier read from the SIM card **120a,** an acknowledgement is sent from the SIM to the wireless network **20** and normal device usage is permitted. If, however, the retrieved identifier and the corresponding identifier stored in the SIM card **120a** do not match, an error message may be displayed and further processing (e.g., disconnect call, prevent wireless access) may be performed. Accordingly, a process involving less than a full hash may be performed in response to receipt of a challenge signal in order to determine whether there have been any, possibly unauthorized, changes to the hardware and/or software of the communication device **100.**

Should a user need to operate the terminal with SIMs from different network operators, WLAN access software from each of the SIMs' network operators must be installed. In this case, the SIM will select the WLAN software that its corresponding network operator has provided. Alternatively, different SIM cards from the same network operator may be inserted by the user into the communication device **100.** These different SIM cards permit personalization of the operation the communication device **100** to be performed. Typically, each of the SIM cards from the same operator store a common hashing algorithm and associated checking routine. Accordingly, if the SIM card currently installed in the communication device **100** is not the one used during the installation of the network operator's WLAN software, it may still have the same hashing algorithm if it is provided by the same network operator.

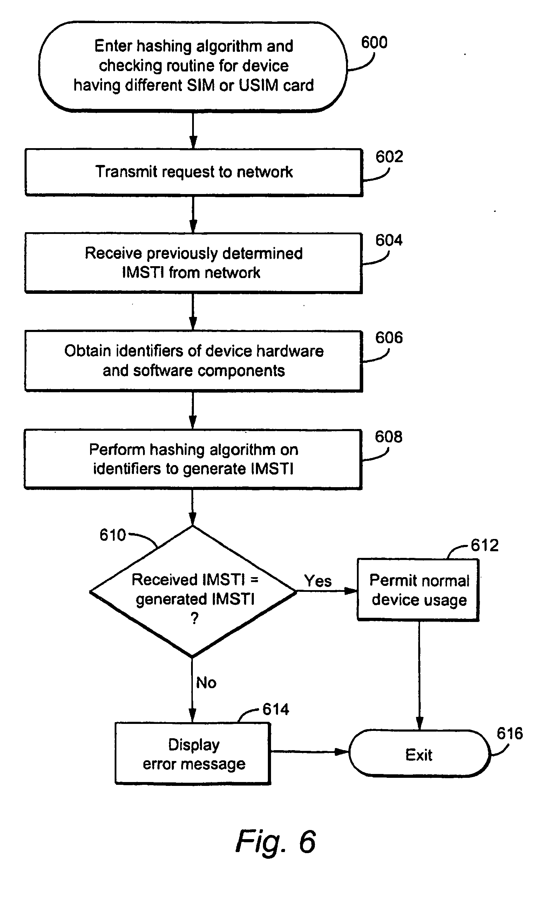

A program logic module illustrated in FIG. 6 for performing a hashing algorithm and checking routine for a device having different SIM cards is entered at step **600.** This program logic module, however, may be performed for checking the IMSTI of a communication device **100** having the same SIM card if it has transmitted a validation request to the wireless network **20.** In this case, the program logic module performing the hashing algorithm and checking routine after transmitting the validation request may be performed alternatively or in addition to those program logic modules illustrated in Figs. 4 and 5.

When a different SIM card **120a** from the same network operator is installed into the communication device **100,** the SIM card of the device **100** transmits a validation request to the wireless network **20** at step **602.** The wireless network **20** encrypts and securely downloads a previously generated IMSTI to the requesting SIM at step **604.** The previously generated IMSTI results from a hash algorithm which has been previously performed on device component identifiers when another SIM was installed in the communication device **100.** The program logic module then obtains at least one identifier of a hardware component and at least one identifier of a software component of the communication device **100** at step **606.** A hashing algorithm is performed based on the obtained identifiers to generate an IMSTI at step **608.** The IMSTI received from the wireless network **20** at step **604** is then checked against the IMSTI of the communication device **100** calculated at step **608** to see if they match at step **610.** If there is a match ("Yes" in step **610**), the device software and hardware are validated as accepted versions (and not rogue version(s)) by the network operator. The software accessing the wireless network has thus been validated as being properly configured and registered with the operator of wireless network **20.** Normal device usage is thus permitted at step **612.**

If, however, the previously determined IMSTI received at step **604** does not match the IMSTI generated at step **608** ("No" in step **610**), an error message is displayed at step **614.** The SIM does not allow operation. The device software must be reinstalled. The program logic module illustrated in FIG. 6 exits at step **616.**

While the generation and checking of the IMSTI is described above (see FIGS. 1A-6) for use with devices which load subscriber information stored on a removable card, they can also be used in terminals where there is no removable card and the terminal can securely store the IMSTI hash algorithm and the actual hash. It is also possible to use the IMSTI in other terminals, such as TDMA and analog terminals, although this would have a lower level of security. The TDMA and analog terminals may store the subscriber information directly in a memory of the terminal. Other terminals in which the above described generation and checking of the IMSTI may be accomplished include Wi-Max,

iDEN and Iridium terminals. The iDEN and Iridium terminals may, for example, load subscriber information from an installed SIM card.

While the invention has been described in connection with what is presently considered to be practical exemplary embodiments, it is to be understood that the invention is not limited to the disclosed embodiments, but, on the contrary, is intended to cover all variations, modifications and equivalent arrangements included within the scope of the appended claims.

## Claims

1. A method for use in an electronic device (100) including at least one software component and at least one hardware component, the method comprising:
generating, in the electronic device, a hash valve by performing a hashing algorithm (304) on an identifier of the at least one software component and an identifier of the at least one hardware component;
storing the generated hash value;
generating, in the electronic device, another hash value by performing the hashing algorithm (404, 504, 608) on an identifier of the at least one software component and an identifier of the at least one hardware component; and
comparing the another hash value with the stored hash value (408,508,610)
determining whether software used by the electronic device for accessing a wireless network (20) remains unmodified based on the comparison of the another hash value and the stored hash value.

2. The method as in claim 1 wherein the hash value and/or the hashing algorithm is stored in a removable card (120) operatively coupled with the electronic device.

3. The method as in claim 2 wherein the hash value is encrypted prior to being stored in the removable card.

4. The method as in claim 1 wherein the hash value and/or hashing algorithm is stored in a memory (100) of the electronic device other than a memory provided on a removable card installed in the electronic device.

5. The method as in claim 1 wherein the determining of whether software used by the electronic device for accessing the wireless network remains unmodified is initiated by a start-up process of the electronic device (400).

6. The method as in claim 1 wherein the electronic device externally transmits a signal indicative of the determining of whether the software used by the electronic device for accessing the wireless network remains unmodified.

7. The method as in claim 1 wherein the determining of whether software used by the electronic device for accessing the wireless network remains unmodified is initiate in response to a challenge signal received by the electronic device from the wireless network (500).

8. The method as in claim 7 wherein the electronic device externally transmits a response signal to the received challenge signal, the response signal indicating the determining of whether the software used by the electronic device for accessing the wireless network unmodified.

9. The method as in claim 1 further comprising encrypting the generated hash value and transmitting the encrypted hash value from the electronic device to the wireless network.

10. The method as in claim 1, wherein the identifier of the at least one software component includes a WLAN access software identifier.

11. The method as in claim 1, wherein the identifier of the at least one hardware component includes a WLAN module MAC address identifier.

12. The method as in claim 1, wherein the number of identifiers used to generate the another hash value is less than the number of identifiers used to generate the stored hash value.

13. An electronic device (100) including at least one hardware component and at least one software component, the device comprising;
means for generating a hash value (110a, 106, 304) by performing a hashing algorithm on an identifier of the at least one software component and an identifier of the at least one hardware component;
means for storing the generated hash value;
means for generating another hash value (110a, 106, 404, 504, 608) by performing the hashing algorithm (404, 504, 608) on an identifier of the at least one software component and an identifier of the at least one hardware component; and
means for comparing the another hash value with the stored hash value; (408, 508, 610)
means for determining whether software used by the electronic device for accessing a wireless network (20) remains unmodified based on a comparison of the generated hash value and the another hash value.

14. The electronic device as in claim 13, further comprising a removable card (120) operatively coupled with the electronic device for storing generated hash value and/or the hashing algorithm.

15. The electronic device as in claim 14, further comprising means for encrypting the generated hash value prior to being stored in the removable card.

16. The electronic device as in claim 13, wherein hashing algorithm and/or the hash value is stored in a memory (110) of the electronic device other than a memory provided on a removable card installed in the electronic device.

17. The electronic device as in claim 13, wherein operation of the means for determining is initiated by a start-up process (400) of the electronic device.

18. The electronic device as in claim 13, further comprising means for transmitting a signal indicative of the determination of whether the software used by the electronic device for accessing the wireless network remains unmodified.

19. The electronic device as in claim 13, wherein operation of the means for determining is initiated in response to a challenge signal (500) received by the electronic device from the wireless network.

20. The electronic device as in claim 19, wherein the electronic device externally transmits a response signal to the received challenge signal, the response signal indicating the determining of whether the software used by the electronic device for accessing the wireless network remains unmodified.

21. The electronic device as in claim 13, further comprising means for encrypting the generated hash value and means for transmitting the encrypted hash value from the electronic device to the wireless network.

22. The electronic device as in claim 13, wherein the identifier of the at least one software component includes a WLAN access software identifier.

23. The electronic device as in claim 13, wherein the identifier of the at least one hardware component includes a WLAN module MAC address identifier.

24. The electronic device as in claim 13, wherein the number of identifiers used to generate the another hash value is less than the number of identifiers used to generate the stored hash value.

25. A computer program storage medium carrying a computer program for an electronic device (100) including at least one software component and at least one hardware component, said program being capable, when executed, of effecting a method comprising:
generating in the electronic device, a hash value by performing a hashing algorithm (304) on an identifier of the at least one software component and an identifier of the at least one hardware component;
storing the generated hash value;
generating in the electronic device, another hash value by performing the hashing algorithm (404, 504, 608) on an identifier of the at least one software component and an identifier of the at least one hardware component; and
comparing the another hash value with the stored hash value (408, 508, 610);
determining whether software used by the electronic device for accessing a wireless network (20) remains unmodified based on the comparison of the another value and the stored hash value.

26. The computer program storage medium as in claim 25 wherein the generated hash value and/or the hashing algorithm is stored in a removable card (120) operatively coupled with the electronic card.

27. The computer program storage medium as in claim 25, wherein the hash value is encrypted prior to being in the removable card.

28. The computer program storage medium as in claim 25, wherein the hashing algorithm and/or the hash value is stored in a memory (110) other than a memory provided on a removable card installed in the electronic device.

29. The computer program storage medium as in claim 25, wherein the determining of whether software used by the electronic device for accessing the wireless network remains unmodified is initiated by a start-up process of the electronic device.

30. The computer program storage medium as in claim 25, wherein the electronic device externally transmits a signal indicative of the determining of whether the software used by the electron:c device for accessing the wireless network remains unmodified.

31. The computer program storage medium as in claim 25, wherein the determining of whether software used by the electronic device for accessing the wireless network remains unmodified is initiated in response to a challenge signal received by the electronic device from the wireless network (500).

32. The computer program storage medium as in claim 31 wherein the electronic device externally transmits a response signal to the received challenge signal, the response signal indicating the determining of whether the software used by the electronic device for accessing the wireless network remains unmodified.

33. The computer program storage medium as in claim 25, wherein the computer program, when executed, effects the method which further comprises encrypting the generated hash value and transmitting the encrypted hash value from the electronic device to the wireless network.

34. The computer program storage medium as in claim 25, wherein the number of identifiers used to generate the another hash value is less than the number of identifiers used to generate the stored hash value.

## Patentansprüche

1. Verfahren zur Verwendung in einer elektronischen Vorrichtung (100) mit zumindest einer Softwarekomponente und zumindest einer Hardwarekomponente, wobei das Verfahren aufweist:
Erzeugen eines Hash-Werts in der elektronischen Vorrichtung durch Durchführen eines Hashing-Algorithmus (304) auf einem Identifizierer der zumindest einen Softwarekomponente und einem Identifizierer der zumindest einen Hardwarekomponente;
Speichern des erzeugten Hash-Werts;
Erzeugen eines weiteren Hash-Werts in der elektronischen Vorrichtung durch Durchführen des Hashing-Algorithmus (404, 504, 608) auf einem Identifizierer der zumindest einen Softwarekomponente und einem Identifizierer der zumindest einen Hardwarekomponente; und
Vergleichen des weiteren Hash-Werts mit dem gespeicherten Hash-Wert (408, 508, 610),
Bestimmen, ob eine Software, die von der elektronischen Vorrichtung zum Zugreifen auf ein drahtloses Netzwerk (20) verwendet wird, unmodifiziert bleibt, basierend auf dem Vergleich des weiteren Hash-Werts mit dem gespeicherten Hash-Wert.

2. Verfahren gemäß Anspruch 1, wobei der Hash-Wert und/oder der Hashing-Algorithmus in einer entfernbaren Karte (120) gespeichert sind, die betriebsfähig mit der elektronischen Vorrichtung verbunden ist.

3. Verfahren gemäß Anspruch 2, wobei der Hash-Wert verschlüsselt wird, bevor er in der entfernbaren Karte gespeichert wird.

4. Verfahren gemäß Anspruch 1, wobei der Hash-Wert und/oder der Hashing-Algorithmus in einem Speicher (100) der elektronischen Vorrichtung gespeichert werden, der verschieden ist von einem Speicher, der auf einer entfernbaren Karte vorgesehen ist, die in der elektronischen Vorrichtung installiert ist.

5. Verfahren gemäß Anspruch 1, wobei das Bestimmen, ob eine Software, die von der elektronischen Vorrichtung zum Zugreifen auf das drahtlose Netzwerk verwendet wird, unmodifiziert bleibt, durch einen Start-Vorgang der elektronischen Vorrichtung initiiert wird (400).

6. Verfahren gemäß Anspruch 1, wobei die elektronische Vorrichtung extern ein Signal überträgt, das die Bestimmung anzeigt, ob die Software, die von der elektronischen Vorrichtung zum Zugreifen auf das drahtlose Netzwerk verwendet wird, unmodifiziert bleibt.

7. Verfahren gemäß Anspruch 1, wobei das Bestimmen, ob eine Software, die von der elektronischen Vorrichtung zum Zugreifen auf das drahtlose Netzwerk verwendet wird, unmodifiziert bleibt, initiiert wird in Reaktion auf ein Abfragesignal, das von der elektronischen Vorrichtung von dem drahtlosen Netzwerk empfangen wird (500).

8. Verfahren gemäß Anspruch 7, wobei die elektronische Vorrichtung extern ein Antwortsignal auf das empfangene Abfragesignal überträgt, wobei das Antwortsignal die Bestimmung anzeigt, ob die Software, die von der elektronischen Vorrichtung zum Zugreifen auf das drahtlose Netzwerk verwendet wird, unmodifiziert bleibt.

9. Verfahren gemäß Anspruch 1, das weiter aufweist Verschlüsseln des erzeugten Hash-Werts und Übertragen des verschlüsselten Hash-Werts von der elektronischen Vorrichtung an das drahtlose Netzwerk.

10. Verfahren gemäß Anspruch 1, wobei der Identifizierer der zumindest einen Softwarekomponente einen WLAN-Zugriffs-Software-Identifizierer umfasst.

11. Verfahren gemäß Anspruch 1, wobei der Identifizierer der zumindest einen Hardwarekomponente einen WLAN-Modul-MAC-Adressen-Identifizierer umfasst.

12. Verfahren gemäß Anspruch 1, wobei die Anzahl der Identifizierer, die zur Erzeugung des weiteren Hash-Werts verwendet werden, geringer ist als die Anzahl der Identifizierer, die zur Erzeugung des gespeicherten Hash-Werts verwendet werden.

13. Elektronische Vorrichtung (100) mit zumindest einer Hardwarekomponente und zumindest einer Softwarekomponente, wobei die Vorrichtung aufweist:
Mittel zum Erzeugen eines Hash-Werts (110a, 106, 304) durch Durchführen eines Hashing-Algorithmus auf einem Identifizierer der zumindest einen Softwarekomponente und einem Identifizierer der zumindest einen Hardwarekomponente;
Mittel zum Speichern des erzeugten Hash-Werts;
Mittel zum Erzeugen eines weiteren Hash-Werts (110a, 106, 404, 504, 608) durch Durchführen des Hashing-Algorithmus (404, 504, 608) auf einem Identifizierer der zumindest einen Softwarekomponente und einem Identifizierer der zumindest einen Hardwarekomponente; und
Mittel zum Vergleichen des weiteren Hash-Werts mit dem gespeicherten Hash-Wert (408, 508, 610);
Mittel zum Bestimmen, ob eine Software, die von der elektronischen Vorrichtung zum Zugreifen auf ein drahtloses Netzwerk (20) verwendet wird, unmodifiziert bleibt, basierend auf einem Vergleich des erzeugten Hash-Werts mit dem weiteren Hash-Wert.

14. Elektronische Vorrichtung gemäß Anspruch 13, die weiter aufweist eine entfernbare Karte (120), die betriebsfähig mit der elektronischen Vorrichtung verbunden ist, zum Speichern des erzeugten Hash-Werts und/oder des Hashing-Algorithmus.

15. Elektronische Vorrichtung gemäß Anspruch 14, die weiter aufweist Mittel zum Verschlüsseln des erzeugten Hash-Werts, bevor er in der entfernbaren Karte gespeichert wird.

16. Elektronische Vorrichtung gemäß Anspruch 13, wobei der Hashing-Algorithmus und/oder der Hash-Wert in einem Speicher (110) der elektronischen Vorrichtung gespeichert sind, der verschieden ist von einem Speicher, der auf einer entfernbaren Karte vorgesehen ist, die in der elektronischen Vorrichtung installiert ist.

17. Elektronische Vorrichtung gemäß Anspruch 13, wobei eine Operation des Mittels zum Bestimmen durch einen Start-Vorgang (400) der elektronischen Vorrichtung initiiert wird.

18. Elektronische Vorrichtung gemäß Anspruch 13, die weiter aufweist Mittel zum Übertragen eines Signals, das die Bestimmung anzeigt, ob die Software, die von der elektronischen Vorrichtung zum Zugreifen auf das drahtlose Netzwerk verwendet wird, unmodifiziert bleibt.

19. Elektronische Vorrichtung gemäß Anspruch 13, wobei eine Operation des Mittels zum Bestimmen initiiert wird in Reaktion auf ein Abfragesignal (500), das von der elektronischen Vorrichtung von dem drahtlosen Netzwerk empfangen wird.

20. Elektronische Vorrichtung gemäß Anspruch 19, wobei die elektronische Vorrichtung extern ein Antwortsignal auf das empfangene Abfragesignal überträgt, wobei das Antwortsignal die Bestimmung anzeigt, ob die Software, die von der elektronischen Vorrichtung zum Zugreifen auf das drahtlose Netzwerk verwendet wird, unmodifiziert bleibt.

21. Elektronische Vorrichtung gemäß Anspruch 13, das weiter aufweist Mittel zum Verschlüsseln des erzeugten Hash-Werts und Mittel zum Übertragen des verschlüsselten Hash-Werts von der elektronischen Vorrichtung an das drahtlose Netzwerk.

22. Elektronische Vorrichtung gemäß Anspruch 13, wobei der Identifizierer der zumindest einen Softwarekomponente einen WLAN-Zugriffs-Software-Identifizierer umfasst.

23. Elektronische Vorrichtung gemäß Anspruch 13, wobei der Identifizierer der zumindest einen Hardwarekomponente einen WLAN-Modul-MAC-Adressen-Identifizierer umfasst.

24. Elektronische Vorrichtung gemäß Anspruch 13, wobei die Anzahl der Identifizierer, die zur Erzeugung des weiteren Hash-Werts verwendet werden, geringer ist als die Anzahl der Identifizierer, die zur Erzeugung des gespeicherten Hash-Werts verwendet werden.

25. Computerprogrammspeichermedium, das ein Computerprogramm enthält, für eine elektronische Vorrichtung (100) mit zumindest einer Softwarekomponente und zumindest einer Hardwarekomponente, wobei das Programm bei Ausführung ein Verfahren bewirken kann, das aufweist:
Erzeugen eines Hash-Werts in der elektronischen Vorrichtung durch Durchführen eines Hashing-Algorithmus (304) auf einem Identifizierer der zumindest einen Softwarekomponente und einem Identifizierer der zumindest einen Hardwarekomponente;
Speichern des erzeugten Hash-Werts;
Erzeugen eines weiteren Hash-Werts in der elektronischen Vorrichtung durch Durchführen des Hashing-Algorithmus (404, 504, 608) auf einem Identifizierer der zumindest einen Softwarekomponente und einem Identifizierer der zumindest einen Hardwarekomponente; und
Vergleichen des weiteren Hash-Werts mit dem gespeicherten Hash-Wert (408, 508, 610);
Bestimmen, ob eine Software, die von der elektronischen Vorrichtung zum Zugreifen auf ein drahtloses Netzwerk (20) verwendet wird, unmodifiziert bleibt, basierend auf dem Vergleich des weiteren Hash-Werts mit dem gespeicherten Hash-Wert.

26. Computerprogrammspeichermedium gemäß Anspruch 25, wobei der erzeugte Hash-Wert und/oder der Hashing-Algorithmus in einer entfernbaren Karte (120) gespeichert sind, die betriebsfähig mit der elektronischen Karte verbunden ist.

27. Computerprogrammspeichermedium gemäß Anspruch 25, wobei der Hash-Wert verschlüsselt wird, bevor er in der entfernbaren Karte gespeichert wird.

28. Computerprogrammspeichermedium gemäß Anspruch 25, wobei der Hashing-Algorithmus und/oder der Hash-Wert in einem Speicher (110) der elektronischen Vorrichtung gespeichert werden, der verschieden ist von einem Speicher, der auf einer entfernbaren Karte vorgesehen ist, die in der elektronischen Vorrichtung installiert ist.

29. Computerprogrammspeichermedium gemäß Anspruch 25, wobei das Bestimmen, ob eine Software, die von der elektronischen Vorrichtung zum Zugreifen auf das drahtlose Netzwerk verwendet wird, unmodifiziert bleibt, durch einen Start-Vorgang der elektronischen Vorrichtung initiiert wird.

30. Computerprogrammspeichermedium gemäß Anspruch 25, wobei die elektronische Vorrichtung extern ein Signal überträgt, das die Bestimmung anzeigt, ob die Software, die von der elektronischen Vorrichtung zum Zugreifen auf das drahtlose Netzwerk verwendet wird, unmodifiziert bleibt.

31. Computerprogrammspeichermedium gemäß Anspruch 25, wobei das Bestimmen, ob eine Software, die von der elektronischen Vorrichtung zum Zugreifen auf das drahtlose Netzwerk verwendet wird, unmodifiziert bleibt, initiiert wird in Reaktion auf ein Abfragesignal, das von der elektronischen Vorrichtung von dem drahtlosen Netzwerk empfangen wird (500).

32. Computerprogrammspeichermedium gemäß Anspruch 31, wobei die elektronische Vorrichtung extern ein Antwortsignal auf das empfangene Abfragesignal überträgt, wobei das Antwortsignal die Bestimmung anzeigt, ob die Software, die von der elektronischen Vorrichtung zum Zugreifen auf das drahtlose Netzwerk verwendet wird, unmodifiziert bleibt.

33. Computerprogrammspeichermedium gemäß Anspruch 25, wobei das Computerprogramm bei Ausführung das Verfahren bewirkt, das weiter aufweist Verschlüsseln des erzeugten Hash-Werts und Übertragen des verschlüsselten Hash-Werts von der elektronischen Vorrichtung an das drahtlose Netzwerk.

34. Computerprogrammspeichermedium gemäß Anspruch 25, wobei die Anzahl der Identifizierer, die zur Erzeugung des weiteren Hash-Werts verwendet werden, geringer ist als die Anzahl der Identifizierer, die zur Erzeugung des gespeicherten Hash-Werts verwendet werden.

## Revendications

1. Procédé destiné à être utilisé dans un dispositif électronique (100) comprenant au moins un composant logiciel et au moins un composant matériel, le procédé comprenant :
la génération, dans le dispositif électronique, d'une valeur de hachage en exécutant un algorithme de hachage (304) sur un identifiant de l'au moins un composant logiciel et sur un identifiant de l'au moins un composant matériel ;
le stockage de la valeur de hachage générée ;
la génération, dans le dispositif électronique, d'une autre valeur de hachage en exécutant l'algorithme de hachage (404, 504, 608) sur un identifiant de l'au moins un composant logiciel et sur un identifiant de l'au moins un composant matériel ; et
la comparaison de l'autre valeur de hachage à la valeur de hachage stockée (408, 508, 610) ;
la détermination du fait de savoir si le logiciel utilisé par le dispositif électronique pour accéder à un réseau sans fil (20) reste inchangé sur la base de la comparaison entre l'autre valeur de hachage et la valeur de hachage stockée.

2. Procédé selon la revendication 1, dans lequel la valeur de hachage et/ou l'algorithme de hachage est stockée sur une carte amovible (120) fonctionnellement reliée au dispositif électronique.

3. Procédé selon la revendication 2, dans lequel la valeur de hachage est cryptée avant d'être stockée dans la carte amovible.

4. Procédé selon la revendication 1, dans lequel la valeur de hachage et/ou l'algorithme de hachage est stocké dans une mémoire (100) du dispositif électronique autre qu'une mémoire prévue sur une carte amovible installée dans le dispositif électronique.

5. Procédé selon la revendication 1, dans lequel la détermination du fait de savoir si le logiciel utilisé par le dispositif électronique pour accéder au réseau sans fil reste inchangé est déclenchée par un processus de démarrage du dispositif électronique (400).

6. Procédé selon la revendication 1, dans lequel le dispositif électronique émet vers l'extérieur un signal indiquant la détermination du fait de savoir si le logiciel utilisé par le dispositif électronique pour accéder au réseau sans fil reste inchangé.

7. Procédé selon la revendication 1, dans lequel la détermination du fait de savoir si le logiciel utilisé par le dispositif électronique pour accéder au réseau sans fil reste inchangé est déclenchée en réponse à un signal de défi reçu du réseau sans fil (500) par le dispositif électronique.

8. Procédé selon la revendication 7, dans lequel le dispositif électronique émet vers l'extérieur un signal de réponse au signal de défi reçu, le signal de réponse indiquant la détermination du fait de savoir si le logiciel utilisé par le dispositif électronique pour accéder au réseau sans fil reste inchangé.

9. Procédé selon la revendication 1, comprenant en outre le cryptage de la valeur de hachage générée et la transmission de la valeur de hachage cryptée du dispositif électronique au réseau sans fil.

10. Procédé selon la revendication 1, dans lequel l'identifiant de l'au moins un composant logiciel comprend un identifiant de logiciel d'accès à un réseau WLAN (réseau local sans fil).

11. Procédé selon la revendication 1, dans lequel l'identifiant de l'au moins un composant matériel comprend un identifiant de l'adresse MAC d'un module WLAN.

12. Procédé selon la revendication 1, dans lequel le nombre d'identifiants utilisés pour générer l'autre valeur de hachage est inférieure au nombre d'identifiants utilisés pour générer la valeur de hachage stockée.

13. Dispositif électronique (100) comprenant au moins un composant matériel et au moins un composant logiciel, le dispositif comprenant :
un moyen pour générer une valeur de hachage (110a, 106, 304) en exécutant un algorithme de hachage sur un identifiant de l'au moins un composant logiciel et sur un identifiant de l'au moins un composant matériel ;
un moyen pour stocker la valeur de hachage générée ;
un moyen pour générer une autre valeur de hachage (110a, 106, 404, 504, 608) en exécutant l'algorithme de hachage (404, 504, 608) sur un identifiant de l'au moins un composant logiciel et sur un identifiant de l'au moins un composant matériel ; et
un moyen pour comparer l'autre valeur de hachage à la valeur de hachage stockée (408, 508, 610) ;
un moyen pour déterminer si le logiciel utilisé par le dispositif électronique pour accéder à un réseau sans fil (20) reste inchangé sur la base d'une comparaison entre la valeur de hachage générée et l'autre valeur de hachage.

14. Dispositif électronique selon la revendication 13, comprenant en outre une carte amovible (120) fonctionnellement reliée au dispositif électronique pour stocker une valeur de hachage générée et/ou l'algorithme de hachage.

15. Dispositif électronique selon la revendication 14, comprenant en outre un moyen pour crypter la valeur de hachage générée avant qu'elle soit stockée sur la carte amovible.

16. Dispositif électronique selon la revendication 13, dans lequel l'algorithme de hachage et/ou la valeur de hachage est stockée dans une mémoire (110) du dispositif électronique autre qu'une mémoire prévue sur une carte amovible installée dans le dispositif électronique.

17. Dispositif électronique selon la revendication 13, dans lequel le fonctionnement du moyen de détermination est déclenché par un processus de démarrage (400) du dispositif électronique.

18. Dispositif électronique selon la revendication 13, comprenant en outre un moyen pour transmettre un signal indiquant la détermination du fait de savoir si le logiciel utilisé par le dispositif électronique pour accéder au réseau sans fil reste inchangé.

19. Dispositif électronique selon la revendication 13, dans lequel le fonctionnement du moyen de détermination est déclenché en réponse à un signal de défi (500) reçu du réseau sans fil par le dispositif électronique.

20. Dispositif électronique selon la revendication 19, dans lequel le dispositif électronique transmet vers l'extérieur un signal de réponse au signal de défi reçu, le signal de réponse indiquant la détermination du fait de savoir si le logiciel utilisé par le dispositif électronique pour accéder au réseau sans fil reste inchangé.

21. Dispositif électronique selon la revendication 13, comprenant en outre un moyen pour crypter la valeur de hachage générée et un moyen pour transmettre la valeur de hachage cryptée du dispositif électronique au réseau sans fil.

22. Dispositif électronique selon la revendication 13, dans lequel l'identifiant de l'au moins un composant logiciel comporte un identifiant de logiciel d'accès à un réseau WLAN.

23. Dispositif électronique selon la revendication 13, dans lequel l'identifiant de l'au moins un composant matériel comprend un identifiant d'adresse MAC d'un module WLAN.

24. Dispositif électronique selon la revendication 13, dans lequel le nombre d'identifiants utilisés pour générer l'autre valeur de hachage est inférieur au nombre d'identifiants utilisés pour générer la valeur de hachage stockée.

25. Support de stockage de programme informatique portant un programme informatique destiné à un dispositif électronique (100) comprenant au moins un composant logiciel et au moins un composant matériel, ledit programme étant capable, lors de son exécution, de mettre en oeuvre un procédé comprenant :
la génération, dans le dispositif électronique, d'une valeur de hachage en exécutant un algorithme de hachage (304) sur un identifiant de l'au moins un composant logiciel et sur un identifiant de l'au moins un composant matériel ;
le stockage de la valeur de hachage générée ;
la génération, dans le dispositif électronique, d'une autre valeur de hachage en exécutant l'algorithme de hachage (404, 504, 608) sur un identifiant de l'au moins un composant logiciel et sur un identifiant de l'au moins un composant matériel ; et
la comparaison de l'autre valeur de hachage à la valeur de hachage stockée (408, 508, 610) ;
la détermination du fait de savoir si le logiciel utilisé par le dispositif électronique pour accéder à un réseau sans fil (20) reste inchangé sur la base de la comparaison entre l'autre valeur et la valeur de hachage stockée.

26. Support de stockage de programme informatique selon la revendication 25, dans lequel la valeur de hachage générée et/ou l'algorithme de hachage est stocké sur une carte amovible (120) fonctionnellement reliée à la carte électronique.

27. Support de stockage de programme informatique selon la revendication 25, dans lequel la valeur de hachage est cryptée avant d'être stockée dans la carte amovible.

28. Support de stockage de programme informatique selon la revendication 25, dans lequel l'algorithme de hachage et/ou la valeur de hachage est stocké dans une mémoire (110) autre qu'une mémoire prévue sur une carte amovible installée dans le dispositif électronique.

29. Support de stockage de programme informatique selon la revendication 25, dans lequel la détermination du fait de savoir si le logiciel utilisé par le dispositif électronique pour accéder au réseau sans fil reste inchangé est déclenchée par un processus de démarrage du dispositif électronique.

30. Support de stockage de programme informatique selon la revendication 25, dans lequel le dispositif électronique transmet vers l'extérieur un signal indiquant la détermination du fait de savoir si le logiciel utilisé par le dispositif électronique pour accéder au réseau sans fil reste inchangé.

31. Support de stockage de programme informatique selon la revendication 25, dans lequel la détermination du fait de savoir si le logiciel utilisé par le dispositif électronique pour accéder au réseau sans fil reste inchangé, est déclenchée en réponse à un signal de défi reçu du réseau sans fil (500) par le dispositif électronique.

32. Support de stockage de programme informatique selon la revendication 31, dans lequel le dispositif électronique transmet vers l'extérieur un signal de réponse au signal de défi reçu, le signal de réponse indiquant la détermination du fait de savoir si le logiciel utilisé par le dispositif électronique pour accéder au réseau sans fil reste inchangé.

33. Support de stockage de programme informatique selon la revendication 25, dans lequel le programme informatique, lorsqu'il est exécuté, met en oeuvre le procédé qui comprend en outre le cryptage de la valeur de hachage générée et la transmission de la valeur de hachage cryptée du dispositif électronique au réseau sans fil.

34. Support de stockage de programme informatique selon la revendication 25, dans lequel le nombre d'identifiants utilisés pour générer l'autre valeur de hachage est inférieur au nombre d'identifiants utilisés pour générer la valeur de hachage stockée.
